# EUROPEAN PATENT APPLICATION

(11) **EP 1 997 368 A1**
(43) Date of publication of application: **03.12.2008**
(21) Application number: 08475007.4
(22) Date of filing: 30.05.2008
(51) Int. Cl.: A01K 15/02

(54) **Method of horse training and device for horse training**

(30) Priority: 30.05.2007 UA 2007006005
(71) Applicant: Balatsenko, Viktor, 01010 Kiev (UA)
(72) Inventor: Balatsenko, Viktor, 01010 Kiev (UA)
(74) Representative: Bacik, Kvetoslav

(57) **Abstract**

Invention is concerned with horseracing, namely, with devices for sport horse training.

Device for horse training (1) consists from a cord (2) and balls (3).

Method of horse training including training with the use of devices, putting on the legs of a horse before the training.

## Description

### Technical field

Invention is concerned with horseracing, namely, with devices for sport horse training.

### Background

One of the forms of horseracing is training in manege. This kind of riding includes performing special exercises, defined by the rules of riding. During performing of some elements certain moves of a horse are required, that are not natural for a horse. For instance such exercises as passage or piaffe require from horse to raise legs above normal level.

This manner of walking do not suit to natural moves of a horse. In order to train a horse to make such moves special training is needed. Special training for horseracing can be time-consuming (sometimes it takes several years) and must be hold regularly because break in the training can reduce the level of performing of the required moves.

There are several methods for horse training allowing train a horse to raise legs at the command of a rider. These methods are based on the principle of cultivating and strengthening the reflex. A rider makes commands to a horse. When a horse makes correct moves it is stimulated with food. But by the opinion of experts, with some animals these methods are not effective. Also, in cultivating and strengthening the reflex they are time-consuming. The descriptions of these methods are made in general way, without details. These methods are the result of an experience. But any experience has some restrictions and can be passed only in person.

There are several well-known devices for horse training that regulate manner of walking of an animals and prompt them to make certain legs moves. At the result an animals develop reflex and certain artificial manner of walking. For instance, there is well-known device against kicking and run-away (GB 15183, published 23.11.1905). This device consists from a strap, put on the neck of the animal, connected with the second strap, passed through the legs of an animal, with a block on the end of the second strap. Rope is passed through a block. Rings or bands are put on the hindlegs of an animal and connected with the ends of the rope. This device restricts an animal to move backwards with two legs simultaneously. In accordance with description the device is meant not to train but to bridle a horse. This device has some disadvantages, as it trains an animal not to raise the legs but to make moves that do not suit to sport competitions.

Another well-known device for horse and dogs training (US 4528944, A01 K 15/02, published 16.07.1985) consists from a harness put on the neck and body of an animal with block in the area of the chest. Strips are put on the hindlegs of an animal and connected with the ends of a cord passed through the block. A cord is made from flexible material, stretchable longwise, for instance from synthetic caoutchouc. In accordance with the description, this device shall be used in order to discipline very active animals and to train hindlegs in order to increase physical endurance of an animal. This device has some disadvantages, as it restricts moves of an animal. At the result an animal do not raise legs but quite the contrary.

The aim of the invention is to propose more effective method and device for horse training and for cultivation and strengthening the skill to raise legs.

### Essence of invention

The first task is accomplished with the method of horse training, including the use of the devices, which contains a cord and balls. It shall be put on the legs of a horse before the training. Besides, the first task is accomplished with the method of horse training, including the use of the devices, and every device contains 2-10 balls.

The second task is accomplished with the device for horse training that shall be put on the legs of a horse, and the device contains a cord and balls, put on the cord. Besides, the second task is accomplished with the device contains 2-10 balls.

Example of the use of the device is shown on the figures 1-4.

### List of figures of drafts

Fig.1 is general view of the device for horse training.
Fig.2 is view of a placing of the device for horse training on the leg of a horse.
Fig.3 is general view of a horse with the device for horse training is put on the forelegs of a horse.
Fig.4 is general view of a horse with the device for horse training is put on the forelegs and on the hindlegs of a horse.

### Information which confirms the possibility of realization of invention

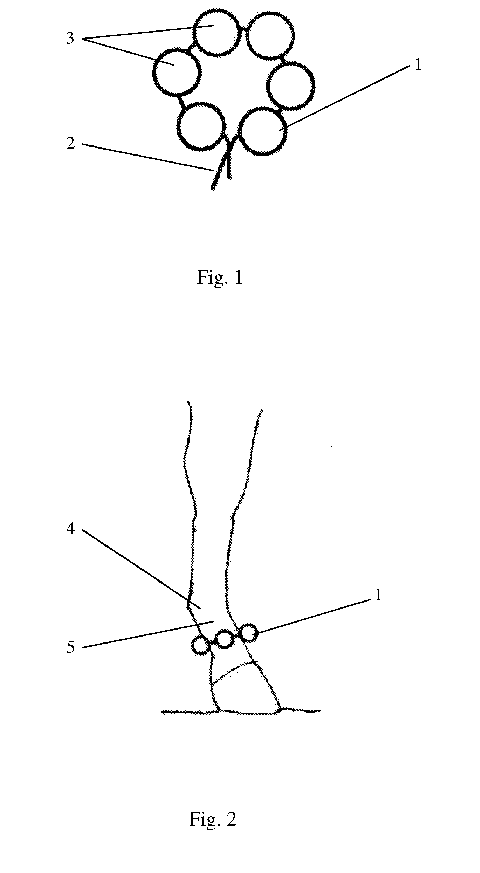

Device for horse training **1** (Fig.1) consists from a cord **2** and balls **3.** Balls are used as elements making some pressure on the skin of the leg of a horse. Every ball can be made with reach-through hole with a cord passed through the ball. A ball can be made from wood or any material that conforms to the hygiene and sanitary norms. Quantity, size and weight of balls can be selected for every animal individually.

The elements of the device are made in shape of a ball in accordance with ergonomics. The elements are in permanent contact with a skin and round shape do not traumatize skin of an animal. Elements of the device making some pressure on the skin of the leg of a horse also can be made in shape of an ellipse with reach-through hole down the long axe. But area of a contact of an ellipse with skin is more than of a ball, so an ellipse makes less pressure on the skin of the leg of a horse and effectiveness of the device will be reduced. Optimal quantity of balls is from 2 to 10. If the device consists less than from two balls effectiveness of the device will be reduced. Using the device with more than 10 balls is not advisable as it don't influence the effectiveness of the device.

A cord can be made from any flexible material. The ends of a cord can be equipped with locking carabiners or other well-known devices for instant connection and disjoining the ends of a cord.

The device shall be placed on the leg of a horse as a bracelet, where a balls make relative circle around the leg of a horse (Fig.2).

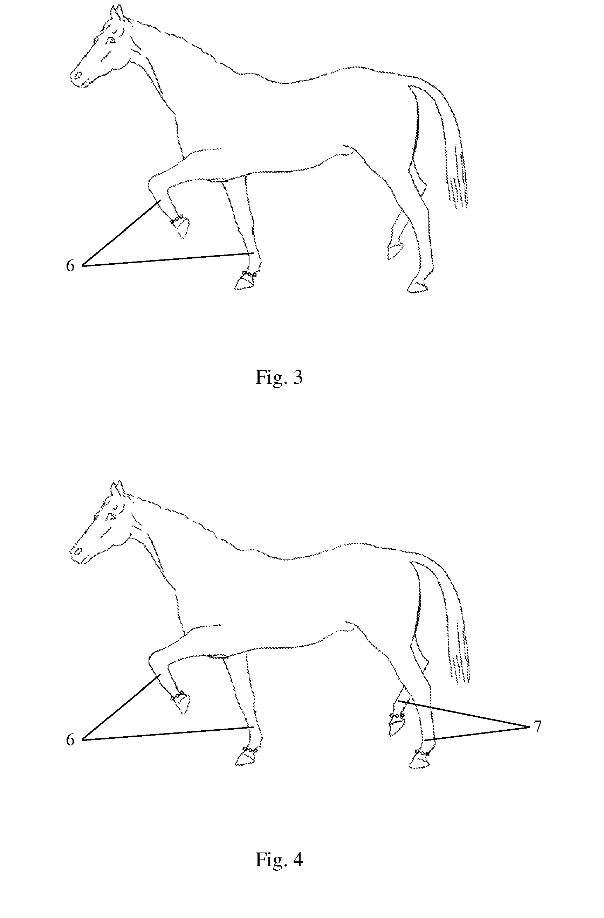

Method of horse training, including training with the use of the device is held as following. Device shall be put on the legs of a horse before training. In case of training only for forelegs device shall be put only on the forelegs **6** (Fig.3). In case of training for forelegs and hindlegs the device shall be put on the forelegs **6** and on the hindlegs **7** (Fig.4). The device can be placed in different places of the leg of a horse. The best effect can be achieved when the device is placed below the fetlock **4** (Fig.2), on the pastern **5**. Several devices can be placed on the leg of the horse. For instance, one device can be placed on the pastern, and another one above the fetlock. When a horse performs the moves during the training, it feels weight on the skin of the leg and by reflex tries to raise the legs higher, to get rid of unknown object that creates certain discomfort. Using the device during the training at regular intervals helps horse to learn the skill to raise legs.

Technical results attained with the invention: reducing time for horse training and preparation before sport competitions; increasing of effectiveness of the training and the level of preparation of sport horses, as device prompts legs of the animal to perform certain moves because of natural reflex.

Given example illustrates the invention but not limits it.

## Claims

1. Method of horse training, including training with the use of devices, putting on the legs of a horse before the training, **characterized in that** every device contains a cord (2) and balls (3), put on the cord (2).

2. Method of horse training according to claim 1, **characterized in that** every device contains 2-10 balls (3).

3. Device for horse training, putting on the legs of a horse, **characterized in that** device contains a cord (2) and balls (3), put on the cord (2).

4. Device for horse training according to claim 3, **characterized in that** device contains 2-10 balls (3).
